Europäisches Patentamt

European Patent Office

Office européen des brevets

(19)

(11) Numéro de publication : **0 446 549 B1**

(12) **FASCICULE DE BREVET EUROPEEN**

(45) Date de publication du fascicule du brevet :
**13.04.94 Bulletin 94/15**

(51) Int. Cl.$^5$ : **G01B 11/02,** G01B 11/06, H01J 37/32

(21) Numéro de dépôt : **90420552.3**

(22) Date de dépôt : **18.12.90**

(54) **Procédé de mesure des dimensions d'un espaceur.**

(30) Priorité : **21.12.89 FR 8917387**

(43) Date de publication de la demande :
**18.09.91 Bulletin 91/38**

(45) Mention de la délivrance du brevet :
**13.04.94 Bulletin 94/15**

(84) Etats contractants désignés :
**AT DE FR GB IT NL**

(56) Documents cités :
**EP-A- 0 320 425
US-A- 4 767 495**

(56) Documents cités :
**IBM TECHNICAL DISCLOSURE BULLETIN,
vol. 21, no. 11, avril 1979, pages 4477-4480,
Armonk, NY, US ; R.B. ANANTAKRISHNAN:
"System to satisfy the residual first quartz
process requirement"
PATENT ABSTRACTS OF JAPAN, vol. 5, no.
201 (P-94)[873], 19 décembre 1981; & JP-A-56
120 904**

(73) Titulaire : **FRANCE TELECOM
6, Place d'Alleray
F-75015 Paris (FR)**

(72) Inventeur : **Tissier, Annie
10, Domaine des Plantées- Biviers
F-38330 Saint Ismier (FR)**
Inventeur : **Galvier, Jean
6, Rue Camille Desmoulins
F-38400 Saint Martin d'Hères (FR)**

(74) Mandataire : **de Beaumont, Michel
1bis, rue Champollion
F-38000 Grenoble (FR)**

Jouve, 18, rue Saint-Denis, 75001 PARIS

## Description

La présente invention concerne un procédé pour mesurer les dimensions caractéristiques d'un espaceur ou d'une structure analogue utilisé en particulier lors de la fabrication de certains circuits intégrés.

La présente invention s'applique notamment au domaine des circuits intégrés où elle est utile pour certaines opérations de contrôle de qualité en cours de fabrication.

Dans la réalisation de certains circuits intégrés, on est amené à constituer des structures particulières qui sont appelées des espaceurs.

Un espaceur est constitué d'un résidu d'un certain matériau, localisé exclusivement contre les bords latéraux verticaux des structures présentes au moment de l'étape de réalisation de l'espaceur.

Pour réaliser des espaceurs, on dépose une couche d'épaisseur uniforme d'un certain matériau sur la plaquette en cours de traitement, puis on effectue une gravure anisotrope de cette couche. L'opération de gravure de cette couche est arrêtée dès que les zones de cette couche situées sur des parties horizontales ou inclinées des structures sous-jacentes sont totalement enlevées. Dans ces conditions, les parties de cette couche situées, très localement, contre les bords latéraux verticaux des structures sous-jacentes ne sont que partiellement gravées et laissent donc subsister localement un bourrelet de très faible largeur qui constitue l'espaceur. Cette technique présente essentiellement l'avantage de pouvoir réaliser certaines microstructures de façon autoalignée, sans opération de masquage et de photolithographie. Les espaceurs ont trouvé en microélectronique plusieurs applications, en particulier lors de la réalisation de drains faiblement dopés, correspondant à la technique appelée LDD (Lightly Doped Drain), lors du dépôt de siliciure sur les drains, les sources et les grilles sans court-circuit entre ces différentes parties, ou afin d'adoucir des marches pour permettre un meilleur passage des couches déposées par dessus.

Dans tous les cas où l'on a ainsi recours à la constitution d'espaceurs, il est nécessaire de contrôler, lors de la fabrication, les formes géométriques des espaceurs et de pouvoir effectuer certaines mesures dimensionnelles. Ces contrôles sont d'autant plus nécessaires que les opérations technologiques conduisant à la constitution des espaceurs sont difficiles à maîtriser et sont sujettes à des dérives, en particulier du fait que l'opération de gravure doit être interrompue brusquement. Si l'on interrompt la gravure trop tôt ou trop tard, si la vitesse de gravure est plus grande ou plus faible que celle prévue, l'espaceur qui en résulte ne présente plus la même forme ni les mêmes dimensions.

Un procédé connu pour contrôler la forme et les dimensions des espaceurs consiste à casser une plaquette transversalement aux espaceurs et à examiner la coupe transversale au travers d'un microscope électronique. Cette méthode est chère, longue et délicate. En plus, elle est destructive. On ne connaît pas à ce jour de procédé de contrôle des espaceurs fiable, non destructif et immédiat.

Ainsi, un objet de la présente invention est de prévoir un procédé permettant la mesure des dimensions caractéristiques des espaceurs.

Pour atteindre ces objets, la présente invention prévoit un procédé de mesure des dimensions d'un espaceur consistant à:

- former sur un substrat un réseau de bandes parallèles, chaque bande ayant une section transversale rectangulaire ;
- réaliser des espaceurs sur les bords latéraux des bandes parallèles, ces espaceurs présentant, selon une section transversale, une largeur $\ell$ correspondant à la distance séparant le bord de la bande et le bord extérieur de l'espaceur au niveau de leur contact avec le substrat, et un angle $\theta$ que forme, avec le plan du substrat, la tangente au bord extérieur de l'espaceur au niveau du substrat ;
- au cours de l'étape de réalisation des espaceurs ou à la suite de celle-ci, éclairer le réseau par un faisceau lumineux monochromatique dont la lumière diffractée produit une figure de diffraction composée d'une tache lumineuse principale correspondant à la réflexion spéculaire et d'une multitude de taches adjacentes alignées de diffraction dont l'enveloppe présente un lobe principal incluant la tache principale et des lobes secondaires parmi lesquels le premier lobe est adjacent au lobe principal ;
- mesurer la somme des intensités lumineuses d'un nombre prédéterminé de taches appartenant au premier lobe ; et
- en déduire la largeur $\ell$ et l'angle $\theta$ de l'espaceur par les formules suivantes :

$$\ell = k1 \times IL1 + k2$$
$$\theta = k3 \times IL1 + k4$$

dans lesquelles k1, k2, k3, et k4 sont des coefficients déterminés au préalable avec des espaceurs de dimensions connues.

L'espaceur présentant une hauteur h correspondant, selon une section transversale, à la distance séparant le bord supérieur de l'espaceur en contact avec le bord latéral de la bande parallèle et la surface du substrat, et la valeur algébrique d correspondant à la différence entre la hauteur h et l'épaisseur e de la bande parallèle, on déduit la valeur algébrique d par la formule suivante :

$$d = k5 \times IL1 + k6,$$

dans laquelle k5, et k6 sont des coefficients déterminés au préalable avec des espaceurs de dimensions connues.

Ces objets, caractéristiques et avantages ainsi que d'autres de la présente invention seront exposés plus en détail dans la description suivante d'un mode de réalisation particulier faite en relation avec les figures jointes parmi lesquelles :

la figure 1A représente schématiquement, en coupe transversale, les couches existantes avant la gravure destinée à la réalisation des espaceurs ;

la figure 1B représente schématiquement, en coupe transversale, la même structure que la figure 1A mais à un stade intermédiaire de la gravure destinée à la réalisation des espaceurs ;

la figure 1C représente schématiquement, en coupe transversale, la même structure à un stade de gravure plus avancé ;

la figure 1D représente schématiquement, en coupe transversale, la même structure à un stade de gravure encore plus avancé, correspondant à l'élaboration correcte des espaceurs ;

la figure 1E représente schématiquement, en coupe transversale, la même structure résultant d'une surgravure des espaceurs ;

la figure 2 représente le diagramme de diffraction obtenu lors de la mise en oeuvre de l'invention ;

la figure 3 représente la courbe établissant la relation linéaire entre la largeur de l'espaceur et la mesure d'intensité lumineuse selon l'invention ;

la figure 4 représente la courbe établissant la relation linéaire entre l'angle $\theta$ et la mesure d'intensité lumineuse selon l'invention ; et

la figure 5 représente la courbe établissant la relation entre le décrochement d et la mesure d'intensité lumineuse selon l'invention.

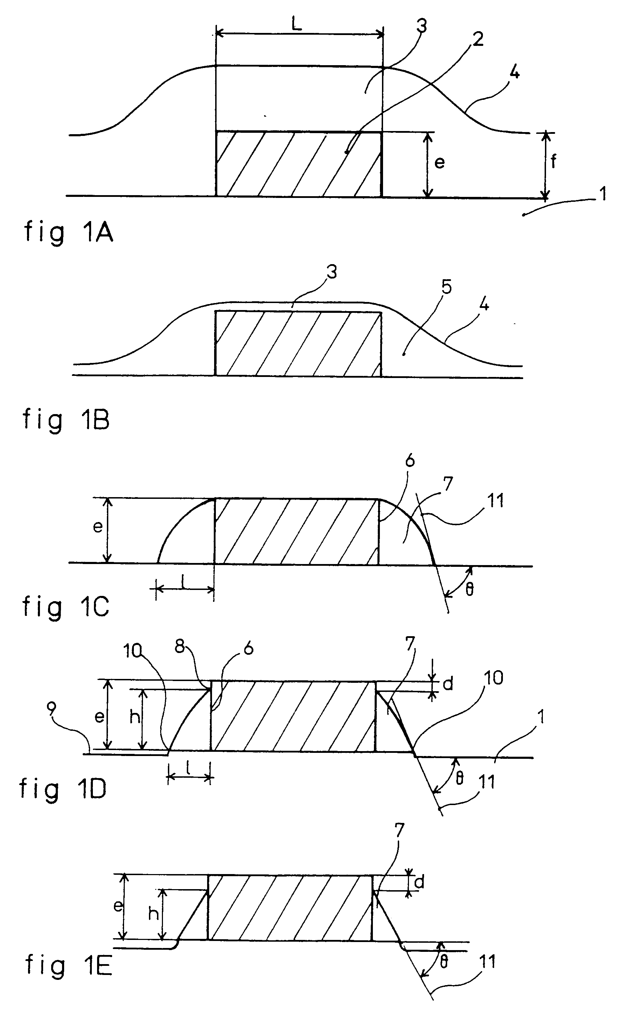

La figure 1 illustre de façon schématique la structure que l'on doit réaliser avant l'opération de gravure destinée à la réalisation des espaceurs. Sur un substrat 1, constitué généralement d'une plaquette en matériau semiconducteur, on dépose une couche d'un premier matériau, sur une épaisseur e. On effectue ensuite une opération, connue en soi, de photolithographie et de gravure anisotrope conduisant à la réalisation, à partir de la couche déposée initialement, de motifs 2 présentant une section transversale rectangulaire. On dépose ensuite sur toute la plaquette une couche 3 d'un second matériau sur une épaisseur f. La couche 3 peut être déposée par pulvérisation ou par un procédé de dépôt chimique en phase vapeur. La surface supérieure 4 de la couche 3 est horizontale dans les zones situées sur des zones sous-jacentes elles-mêmes horizontales et est nettement inclinée dans les zones transitoires correspondant à un passage de marche.

On effectue ensuite une opération de gravure anisotrope par un procédé quelconque connu de l'art antérieur. Dans une première phase de cette gravure, comme cela est représenté en figure 1B, la surface supérieure 4 de la couche 3 conserve sensiblement le même profil. On dit que, dans cette phase de gravure, le profil est transféré. On se retrouve alors avec un très net amincissement de l'épaisseur de la couche 3 dans les zones horizontales et une présence relativement importante de matériau de la couche 3 au niveau 5 du passage de marche, c'est-à-dire dans les zones où la surface supérieure 4 de la couche 3 est fortement inclinée.

En poursuivant encore la gravure, on obtient l'enlèvement complet de la couche 3 dans toutes les zones horizontales, et il ne reste plus alors que des bandes étroites, indépendantes, constituées du matériau de la couche 3, longeant les bords latéraux verticaux 6 des motifs 2. Ces bandes étroites 7 sont appelées alors des espaceurs. La figure 1C représente ce stade de gravure au cours duquel on a réalisé les espaceurs 7.

On peut compenser les inhomogénéités de dépôt et de gravure en poursuivant l'opération de gravure jusqu'au stade représenté en figure 1D. Si l'on poursuit encore la gravure, on obtient un amincissement de l'espaceur 7, sa hauteur h se trouve nettement réduite et sa largeur l est réduite également, comme cela est représenté en figure 1E. En poursuivant encore davantage la gravure, on peut obtenir l'élimination totale de l'espaceur 7 (non représenté). Il faut noter que cette poursuite de gravure s'accompagne de la consommation du substrat 1.

Lors de la fabrication de circuits intégrés, la difficulté de réalisation des espaceurs réside dans le fait qu'il faut arrêter à un instant précis l'opération de gravure pour obtenir un espaceur de forme voulue (tel que représenté en figure 1D). En plus, de nombreux autres facteurs sont susceptibles de créer des disparités dans la constitution des espaceurs 7. En effet, si l'épaisseur initiale f de la couche 3 est légèrement trop grande ou trop faible, l'espaceur 7 qui en résultera après l'opération de gravure ne sera pas conforme. Si, par ailleurs, le matériau constituant la couche 3 présente des caractéristiques légèrement différentes de celles considérées comme normales, il peut entraîner une vitesse de gravure plus grande ou plus faible, conduisant également à la réalisation d'espaceurs 7 non conformes. Le procédé même de gravure peut également être soumis à des variations non souhaitées résultant de certains déréglages des machines ou des équipements. On voit par conséquent l'intérêt d'un contrôle dimensionnel précis et fiable des espaceurs. On comprend aussi qu'il est souhaitable que ce contrôle dimensionnel des espaceurs 7 s'effectue très rapidement, pour éviter de fabriquer un trop grand nombre de pièces mauvaises pendant le temps séparant la fabrication et les résultats du contrôle. On voit également qu'il serait très avantageux de pouvoir contrôler les dimensions de l'espaceur 7 pendant l'opération de gravure elle-même, c'est-à-dire de pouvoir opérer un contrôle in situ. L'invention, comme on va le voir dans la description détaillée qui va suivre, permet de répondre à ces souhaits.

Avant de décrire plus en détail le procédé selon l'invention, on va décrire précisément les différentes grandeurs physiques représentatives de la forme de la section transversale de l'espaceur 7, en se référant à la figure 1D. La section transversale de l'espaceur 7 présente une forme générale s'approchant d'un triangle dont le côté opposé à l'angle droit est légèrement bombé. Cette caractéristique n'est pas essentielle pour comprendre l'objet de la présente invention. D'ailleurs, dans certains procédés de réalisation d'espaceurs ceux-ci peuvent présenter des formes légèrement différentes. Cependant, dans tous les espaceurs que l'on réalise actuellement, on retrouve cette forme générale approximative de triangle et l'on peut toujours définir les trois grandeurs caractéristiques h, $\ell$ et $\theta$ de la manière suivante :

la hauteur h de l'espaceur 7 correspond à la distance séparant le bord supérieur 8 de l'espaceur, en contact avec le bord latéral vertical 6 du motif 2, et la surface supérieure plane 9 du substrat 1 ;

la largeur $\ell$ est égale à la distance séparant le bord latéral 6 du motif 2, au niveau de son contact avec le substrat 1, et le bord extérieur 10 de l'espaceur 7, au niveau de son contact avec le substrat 1; et

l'angle $\theta$ est l'angle que forme la tangente 11 au bord extérieur 10 de l'espaceur, au niveau de son contact avec le substrat 1.

On définit en plus la différence de hauteur d selon la formule algébrique suivante :

$$d = h - e.$$

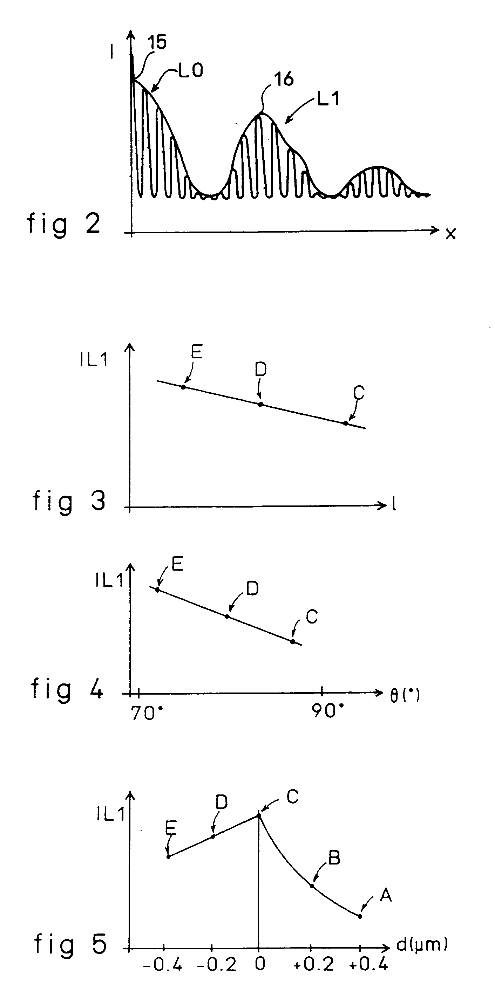

On se référera maintenant essentiellement aux figures 2,3 et 4 pour décrire plus en détail le procédé de mesure selon la présente invention.

Lorsque l'on effectue l'opération de réalisation d'espaceurs sur des plaquettes destinées à constituer par la suite des circuits intégrés, on dispose toujours, sur certaines régions de ces plaquettes, d'espaces dépourvus de circuits intégrés, servant essentiellement à diverses opérations de test et de contrôle.

Dans une de ces zones libres, il est toujours possible de ménager certaines structures particulières qui sont réalisées simultanément avec des opérations correspondantes destinées à la fabrication des circuits intégrés. Dans au moins une de ces zones libres, on forme un réseau de bandes parallèles lors des mêmes étapes technologiques que celles destinées à constituer dans les circuits les microstructures aux bords 6 desquelles on envisage d'associer des espaceurs. On réalise donc un réseau de bandes parallèles 2 en un premier matériau correspondant à celui de ces microstructures. Chaque bande parallèle présente une section transversale approximativement rectangulaire. On peut considérer que les figures 1A à 1E représentent ou bien des microstructures de circuits intégrés auxquels on souhaite associer des espaceurs 7 ou bien des bandes parallèles formant un réseau auquel on envisage également d'associer des espaceurs 7 destinés au contrôle dimensionnel. Selon la présente invention, on réalise ensuite des espaceurs sur les bords latéraux 6 des bandes parallèles 2. Pour cela, on procède aux étapes décrites en relation avec la figure 1. Au cours de l'opération de gravure anisotrope, ou après que cette opération de gravure soit terminée, on éclaire le réseau 2 par un faisceau lumineux monochromatique. Comme cela est représenté en figure 2, la lumière diffractée par le réseau produit une figure de diffraction composée d'une tache lumineuse principale 15 correspondant à la réflexion spéculaire et d'une multitude de taches adjacentes alignées de diffraction dont l'enveloppe présente un lobe principal L0 incluant la tache principale 15 et des lobes secondaires parmi lesquels le premier lobe L1 est adjacent au lobe principal L0. Selon la présente invention, on effectue la mesure de l'intensité lumineuse de taches constituant le premier lobe L1. On peut, soit mesurer l'intensité lumineuse de la tache la plus brillante 16 du premier lobe L1, soit faire la somme des mesures des intensités lumineuses d'un nombre prédéterminé de taches appartenant au premier lobe L1, les taches ainsi prises en compte ne correspondant pas obligatoirement aux taches les plus lumineuses de ce premier lobe L1. On peut également prendre en considération toutes les taches incluses dans le premier lobe L1, c'est-à-dire mesurer l'intensité lumineuse globale du premier lobe L1. En fait, on sélectionnera de préférence un groupe de taches du lobe L1 dont l'intensité lumineuse varie notablement avec le degré de gravure de l'espaceur.

La présente invention se base sur l'observation faite par la demanderesse selon laquelle on peut déduire cette mesure d'intensité lumineuse IL1 d'une ou plusieurs taches du premier lobe L1, la largeur $\ell$, l'angle $\theta$ ainsi que la différence de hauteur d, par comparaison avec des courbes d'étalonnage.

En effet, il a été constaté que l'intensité lumineuse IL1 du premier lobe L1 est en relation linéaire, à la fois avec la largeur $\ell$ de l'espaceur 7, l'angle $\theta$ de l'espaceur 7 et la différence de hauteur d lorsque celle-ci est négative, c'est-à-dire lorsque la hauteur h de l'espaceur 7 est inférieure à l'épaisseur e des bandes parallèles 2.

La figure 3 représente la relation linéaire entre la mesure d'intensité lumineuse IL1 et la largeur $\ell$ de l'espaceur. On voit que l'intensité lumineuse du lobe L1 croît lorsque la largeur $\ell$ de l'espaceur 7 décroît. On peut donc aisément, par un ensemble de mesures expérimentales préalables ou par une simulation, déterminer la fonction linéaire reliant $\ell$ et IL1 par une fonction du type :

$$\ell = k1 \times IL1 + k2$$

dans laquelle k1 et k2 sont deux constantes.

La figure 4 représente la relation linéaire entre le paramètre IL1 et $\theta$. On peut établir pareillement la formule suivante :

$$\theta = k3 \times IL1 + k4,$$

dans laquelle k3 et k4 sont deux constantes.

La figure 5 représente l'évolution de la valeur algébrique d au cours de l'opération de gravure en fonction de l'intensité lumineuse d'un groupe déterminé de taches appartenant au premier lobe 1. Le tout début de l'opération de gravure, correspondant au repère A, correspond à la figure 1A. Le repère B de la figure 5 correspond au niveau de gravure de la figure 1B, et ainsi de suite pour les repères C, D et E. De même, dans les figures 3 et 4, les repères C, D et E correspondent respectivement au niveau de gravure représenté dans les figures 1C, 1D et 1E.

En se reportant à nouveau à la figure 5, on remarque que, pour le groupe de taches choisi dans cet exemple particulier, au début de la gravure, correspondant au repère A, B et C, l'intensité lumineuse IL1 a cru jusqu'à ce que la gravure parvienne à l'état représenté en figure 1C, c'est-à-dire au moment où les zones horizontales de la couche 3 sont totalement enlevées. Lorsque l'on a poursuivi la gravure, en passant successivement dans les états représentés dans les figures 1D et 1E, on voit que l'intensité lumineuse IL1 a évolué linéairement en fonction de la valeur algébrique d. Par conséquent, dans la plage C, D et E, on a pu déterminer pareillement une fonction linéaire entre l'intensité lumineuse IL1 et la grandeur physique d, correspondant à la formule suivante :

$$d = k5 \times IL1 + k6,$$

dans laquelle k5 et k6 sont des constantes.

Pour déterminer les constantes k1 et k6, on procédera à un étalonnage préalable sur des espaceurs de forme et de dimensions connues, déterminées, par exemple, par microscopie électronique.

On notera par ailleurs que, au moment où les zones horizontales de la couches 3 sont complètement gravées, c'est-à-dire quand on se trouve dans la configuration de la figure 1C, l'intensité lumineuse IL1 passe par un maximum, facilement décelable par des moyens de mesures classiques. On peut donc aisément déterminer cet instant précis correspondant au point C et effectuer de la sorte un système de détection de fin d'attaque.

On notera que, pour obtenir une détection de fin d'attaque satisfaisante, il convient de choisir le groupe de taches du premier lobe L1 tel que l'intensité IL1 passe par un optimum pour le niveau de gravure correspondant au point C.

L'invention peut être aisément mise en oeuvre à l'aide d'un appareil approprié (non représenté).

Cet appareil comporte essentiellement une source de lumière monochromatique, en général une source laser, qui vient frapper selon un angle d'incidence déterminé, le réseau de bandes parallèles. L'appareil comporte également un détecteur qui est situé au niveau des taches de diffraction et qui peut être constitué, par exemple d'une barrette de capteurs CCD. L'appareil comporte ensuite, de façon connue en soi, un ensemble de dispositifs électroniques permettant de repérer les différentes taches lumineuses, de repérer la tache 15 correspondant à la réflexion spéculaire, de compter les différentes taches et de repérer le premier lobe L1 et, dans ce lobe L1, la tache 16 la plus lumineuse. L'appareil peut alors effectuer les mesures d'intensité IL1 correspondant au procédé précédemment décrit et effectuer les calculs fort simples pour éditer directement les valeurs des paramètres $\ell$, $\theta$ et d.

## Revendications

1. Procédé de mesure des dimensions d'un espaceur consistant à :
   - former sur un substrat (1) un réseau de bandes parallèles (2), chaque bande (2) ayant une section tranversale rectangulaire ;
   - réaliser des espaceurs (7) sur les bords latéraux (6) des bandes parallèles (2), ces espaceurs présentant, selon une section une section transversale, une largeur $\ell$ correspondant à la distance séparant le bord (6) de la bande (2) et le bord extérieur (10) de l'espaceur (7) au niveau de leur contact avec le substrat, et un angle $\theta$ que forme, avec le plan du substrat, la tangente (11) au bord extérieur (10) de l'espaceur au niveau du substrat ;
   - au cours de l'étape de réalisation des espaceurs ou à la suite de celle-ci, éclairer le réseau par un faisceau lumineux monochromatique dont la lumière diffractée produit une figure de diffraction composée d'une tache lumineuse principale (15) correspondant à la réflexion spéculaire et d'une multitude de taches adjacentes alignées de diffraction dont l'enveloppe présente un lobe principale (L0) incluant la tache principale (15) et des lobes secondaires parmi lesquels un premier lobe (L1) est adjacent au lobe principal (L0) ;
   - mesurer la somme des intensités lumineuses (IL1) d'un nombre prédéterminé de taches appartenant au premier lobe (L1) ; et
   - en déduire la largeur $\ell$ et l'angle $\theta$ de l'espaceur (7) par les formules suivantes :

   $$\ell = k1 \times IL1 + k2$$
   $$\theta = k3 \times IL1 + k4$$

   dans lesquelles k1, k2, k3 et k4 sont des coefficients déterminés au préalable avec des espaceurs de dimensions connues.

2. Procédé de mesure des dimensions d'un espaceur selon la revendication 1, dans lequel l'espaceur présente en outre une hauteur h correspondant, selon une section transversale, à la distance séparant le bord supérieur (8) de l'espaceur en contact avec le bord latéral (6) de la bande parallèle (2) et la surface (9) du substrat (1), et dans lequel une valeur algébrique d correspond à la différence entre la hauteur h et l'épaisseur e de la bande parallèle (2), caractérisé en ce que l'on déduit la valeur algébrique d par la formule suivante :

$$d = k5 \times IL1 + k6,$$

dans laquelle k5, et k6 sont des coefficients déterminés au préalable avec des espaceurs de dimensions connues.

**Patentansprüche**

1. Verfahren zum Messen der Dimensionen eines Abstandshalters mit folgenden Merkmalen:
   - Ausbilden eines Netzes paralleler Streifen (2) auf einem Substrat (1), wobei jeder Streifen (2) einen rechteckigen Querschnitt aufweist;
   - Ausbilden von Abstandshaltern (7) an den Seitenrändern (6) der parallelen Streifen (2), wobei diese Abstandshalter eine Breite l entsprechend der Entfernung zwischen dem Rand (6) des Streifens (2) und dem äußeren Rand (10) des Abstandshalters (7) auf dem Niveau der jeweiligen Berührungspunkte mit dem Substrat und einen Winkel θ zwischen der Ebene des Substrats und der Tangente (11) an den äußeren Rand des Abstandshalters auf dem Niveau des Substrats aufweisen;
   - im Verlauf des Ausbildens der Abstandshalter oder anschließend hieran Beleuchten des Netzes durch ein monochromatisches Lichtbündel, dessen gestreutes Licht eine Streufigur erzeugt, die aus einem leuchtenden Hauptpunkt (15) entsprechend der direkten Spiegelreflexion und einer Vielzahl längs einer Linie ausgerichteter benachbarter Streupunkte zusammengesetzt ist, wobei die Einhüllende eine Hauptkurve (LO), die den Hauptpunkt (15) einschließt, und Nebenkurven bildet, von denen die erste Nebenkurve (L1) der Hauptkurve (LO) benachbart liegt;
   - Messen der Summe der Lichtintensitäten (IL1) einer vorbestimmten Anzahl von Punkten, die der Hauptkurve (L1) zugehörig sind; und
   - Ableiten daraus der Breite l und des Winkels θ des Abstandshalters (7) durch die folgenden Formeln:

     $$l = k1 \times IL1 + k2$$
     $$\theta = k3 \times IL1 + k4$$

     in denen kl, k2, k3 und k4 Koeffizienten sind, die vorab mit Abstandshaltern bekannter Dimensionen bestimmt worden sind.

2. Verfahren zum Messen der Dimensionen eines Abstandshalters nach Anspruch 1, wobei der Abstandshalter zudem eine Höhe h aufweist, die, in einem Querschnitt, der Entfernung zwischen dem oberen Rand (8) des Abstandshalters am Berührungspunkt mit dem Seitenrand (6) des parallelen Streifens (2) und der Oberfläche (9) des Substrats (1) entspricht, und wobei ein algebraischer Wert d der Differenz zwischen der Höhe h und der Dicke e des parallelen Streifens (2) entspricht, dadurch gekennzeichnet, daß der algebraische Wert d durch die folgende Formel abgeleitet wird:

   $$d = k5 \times IL1 + k6$$

   in der k5 und k6 Koeffizienten sind, die vorab mit Abstandshaltern bekannter Dimensionen bestimmt worden sind.

**Claims**

1. A process for measuring the dimensions of a spacer comprising:
   - forming on a substrate (1) an array of parallel stripes (2), each stripe (2) having a rectangular cross section;
   - forming spacers (7) on the lateral edges (6) of said parallel stripes (2), said spacers exhibiting, according to a cross section, a width $\ell$ corresponding to the distance separating the edge (6) of the stripe (2) from the external edge (10) of the spacer (7) at their contact point with the substrate, and an angle $\Theta$ formed, with the substrate plane, by the tangent (11) to the external edge (10) of the spacer at the substrate;
   - during the manufacturing step of spacers or following this step, lighting the array through a monochromatic light beam, the diffracted light of which supplies a diffraction pattern comprised of a main light spot (15) corresponding to the specular reflection and of a multiplicity of aligned and adjacent diffraction spots, the envelope of which exhibits a major lobe (LO) including the main spot (15) and secondary lobes among which a first lobe (L1) is adjacent to the major lobe (LO);
   - measuring the sum of light intensities (IL1) of a predetermined number of spots pertaining to said first lobe (L1);
   - deducting therefrom the width $\ell$ and angle $\Theta$ of the spacer (7) according to the following formulas:

     $$\ell = k1 \times IL1 + k2$$

$$\Theta = k3 \times IL1 + k4$$
wherein k1, k2, k3 and k4 are coefficients previously determined with spacers having known dimensions.

2. A process for measuring the dimensions of a spacer according to claim 1, wherein the spacer further exhibits a height h corresponding, according to a cross section, to the distance separating the upper edge (8) of the spacer contacting the lateral edge (6) of the parallel stripe (2) and the surface (9) of the substrate (1) and wherein an algebraic value d corresponds to the difference between the height h and the thickness e of the parallel stripe (2), characterized in that the algebraic value d is deducted by the following formula:

$$d = k5 \times IL1 + k6,$$
wherein k5 and k6 are coefficients previously determined by comparison with spacers having known dimensions.

fig 1A

fig 1B

fig 1C

fig 1D

fig 1E

fig 2

fig 3

fig 4

fig 5